# DEMANDE DE BREVET EUROPEEN

(11) **EP 2 227 962 A1**
(43) Date de publication de la demande: **15.09.2010**
(21) Numéro de dépôt: 09003445.5
(22) Date de dépôt: 10.03.2009
(51) Int. Cl.: A21C 5/08

(54) **Dispositif de découpe automatique de pâte en pâtons avec chambre de nettoyage**

(71) Demandeur: Jac s.a., 4000 Sclessin-Liège (BE)
(72) Inventeur: Van Cauwenberghe Baudouin, 1652 Beersel (BE)
(74) Mandataire: Mille, Eric

(57) **Abrégé**

Dispositif (1) de découpe automatique de pâte en pâtons comprenant une cuve (3) pourvue d'un fond (4) connecté à un premier support (6) par un premier moyen de connexion (7) espaçant ledit support dudit fond, celui-ci pouvant être déplacé axialement à la cuve entre une première position (A) dans laquelle le fond de la cuve est disposé au niveau le plus bas de celle-ci et une deuxième position (B) dans laquelle le fond de la cuve est à son niveau le plus élevé de celle-ci, le dispositif comprenant un ensemble (9) de lames de découpe de pâte en pâtons connecté à un deuxième support (10) pouvant être déplacé entre une première position (C) dans laquelle l'ensemble de lames est disposé sous ledit fond dans la première position du premier support et une deuxième position (D) dans laquelle ledit ensemble affleure le couvercle de la cuve. L'un des premier et deuxième supports est constitué d'un plateau dont les dimensions sont choisies de sorte qu'il isole le fond de la cuve du volume interne du dispositif situé sous ledit plateau et le dispositif comprend un moyen d'accès (12) depuis l'extérieur du dispositif à une chambre de nettoyage (13) délimitée entre le fond de la cuve et le plateau lorsque ce dernier est disposé sous le niveau le plus bas de celle-ci. L'invention évite que des résidus de pâte ne tombent dans le dispositif sous le plateau.

## Description

La présente invention se rapporte à un dispositif de découpe automatique en pâtons d'un volume de pâte alimentaire introduit dans le dispositif. De tels dispositifs sont utilisés en boulangerie artisanale ou industrielle pour façonner automatiquement des pâtons d'une masse souhaitée. Ils comprennent une cuve généralement cylindrique dont le fond est percé de rainures permettant à au moins un ensemble de lames escamotables, généralement plates et disposées par exemple en damier, de pénétrer et d'être retirées de la cuve axialement à cette dernière, généralement au moyen d'un premier moyen de déplacement, généralement constitué d'un vérin hydraulique ou pneumatique actionné par un moteur, couplé à un support desdites lames, pour assurer la découpe en pâtons du volume de pâte dont la cuve est remplie. Cette cuve est également munie d'un couvercle pouvant être déplacé entre une première position d'ouverture dans laquelle le volume de pâtre à diviser en pâtons peut être introduit dans la cuve et les pâtons formés évacués de ladite cuve et une deuxième position de fermeture dans laquelle la pâte peut être divisée en pâton par les lames qui en cours de division traversent la cuve de part en part axialement et viennent affleurer la face intérieure à la cuve du couvercle. Le fond de telles cuves peut généralement être déplacé axialement dans la cuve au moyen du premier ou d'un deuxième moyen de déplacement, également généralement constitué d'un vérin hydraulique ou pneumatique actionné par un moteur, couplé audit fond, de manière à pouvoir compresser la pâte dans la cuve de sorte à ce qu'elle se répartisse uniformément dans cette dernière avant l'opération de découpe en pâtons par les lames et à pouvoir ensuite évacuer ces pâtons de la cuve en les poussant à l'extérieur par son fond une fois le couvercle ouvert. Le fond de la cuve est généralement composé de plaquettes délimitant entre elles les rainures de passage des lames, chaque plaquette étant reliée à un support, généralement par des bras, chaque bras étant sensiblement orthogonal au support et à la plaquette qu'il y relie. Le support des lames est généralement disposé entre le support du fond de la cuve et ce dernier. Un tel dispositif est illustré par exemple par la demande de brevet FR 2758052.

Lors des mouvements de va et vient des couteaux au travers des rainures du fond mobile de la cuve, et malgré que des moyens d'étanchéité de ces rainures relativement aux lames sont généralement prévus, des fuites de pâte peuvent se produire entre les lames et les rainures, en particulier lors de la compression du volume de pâte contenu dans la cuve du dispositif par le fond de cette cuve contre la face intérieure à la cuve du couvercle de ce dispositif. Dès lors, des résidus de pâte peuvent aboutir sous le fond de la cuve. Les dispositifs selon l'état de la technique posent le problème que ces résidus de pâte tombent dans leur carcasse et salissent les éléments mécaniques qu'elle contient, notamment moteur(s) et vérin(s) hydraulique(s).

La présente invention résout ce problème en proposant un Dispositif de découpe automatique de pâte en pâtons, comprenant une carcasse dans laquelle est disposée une cuve agencée pour recevoir un volume de pâte à découper, ladite cuve étant pourvue d'un fond et d'un couvercle mobile pouvant être déplacé entre une première position de fermeture de la cuve par ledit couvercle et une deuxième position d'ouverture de la cuve, le fond de la cuve étant connecté à un premier support par un premier moyen de connexion espaçant ledit support dudit fond, celui-ci pouvant être déplacé axialement à la cuve par un premier moyen de déplacement entre une première position dans laquelle le fond de la cuve est disposé au niveau le plus bas de celle-ci pour pouvoir y charger un dit volume de pâte à découper et une deuxième position dans laquelle le fond de la cuve est à son niveau le plus élevé de celle-ci, pour pouvoir en extraire le volume de pâte découpé, le dispositif comprenant en outre un ensemble de lames de découpe de pâte en pâtons connecté à un deuxième support, celui-ci pouvant être déplacé par un deuxième moyen de déplacement entre une première position de retrait dans laquelle l'ensemble de lames est disposé sous ledit fond dans la première position du premier support et une deuxième position dans laquelle ledit ensemble affleure le couvercle de la cuve dans sa première position, des rainures étant agencées dans le fond de la cuve pour le passage dans ces rainures de l'ensemble de lames. L'un des premier et deuxième supports est constitué d'un plateau dont les dimensions sont choisies de sorte qu'il isole le fond de la cuve du volume interne du dispositif situé sous ledit plateau et le dispositif comprend un moyen d'accès depuis l'extérieur à une chambre de nettoyage délimitée entre le fond de la cuve et le plateau lorsque ce dernier est disposé sous le niveau le plus bas de celle-ci.

Grâce au fait que l'un des premier et deuxième supports est constitué d'un plateau dont les dimensions sont choisies de sorte qu'il isole le fond de la cuve du volume interne du dispositif situé sous ledit plateau et que le dispositif comprend un moyen d'accès depuis l'extérieur du dispositif à une chambre de nettoyage délimitée entre le fond de la cuve et le plateau lorsque ce dernier est disposé sous le niveau le plus bas de celle-ci, les résidus de pâte qui peuvent aboutir sous le fond de la cuve demeurent dans la chambre de nettoyage sans atteindre les parties du dispositif situées sous cette chambre et les salir et peuvent en être aisément retirés.

L'invention va à présent être décrite plus en détails au moyen d'un exemple de mode de réalisation non limitatif de la porté de cette invention, en références aux figures jointes, dans lesquelles:

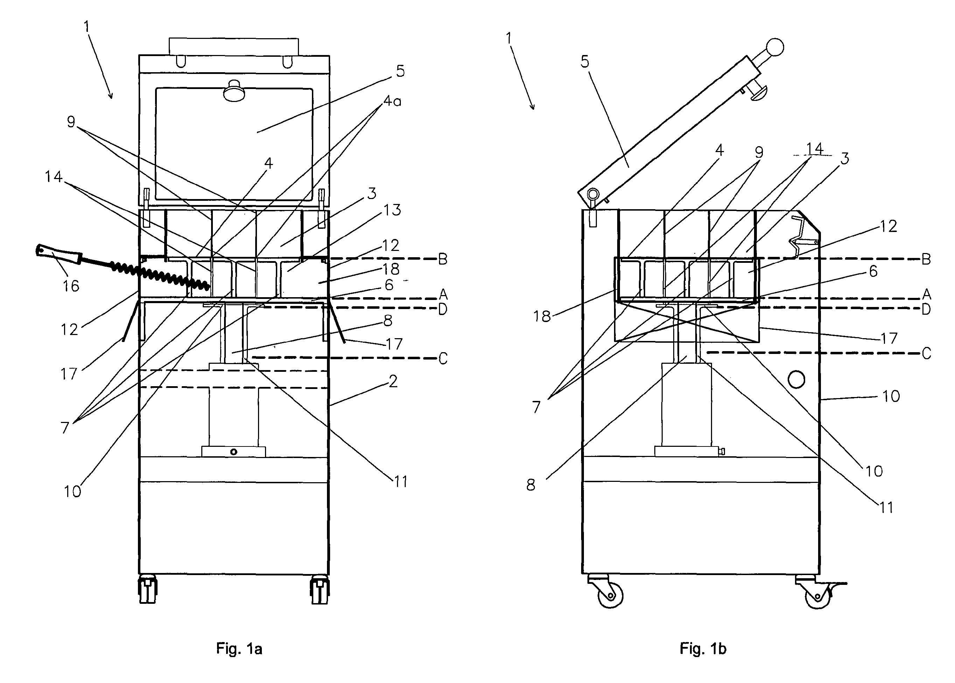

La figure 1a représente une vue de face en coupe verticale d'un dispositif selon l'invention et la figure 1b une vue de profil en coupe verticale de ce dispositif.

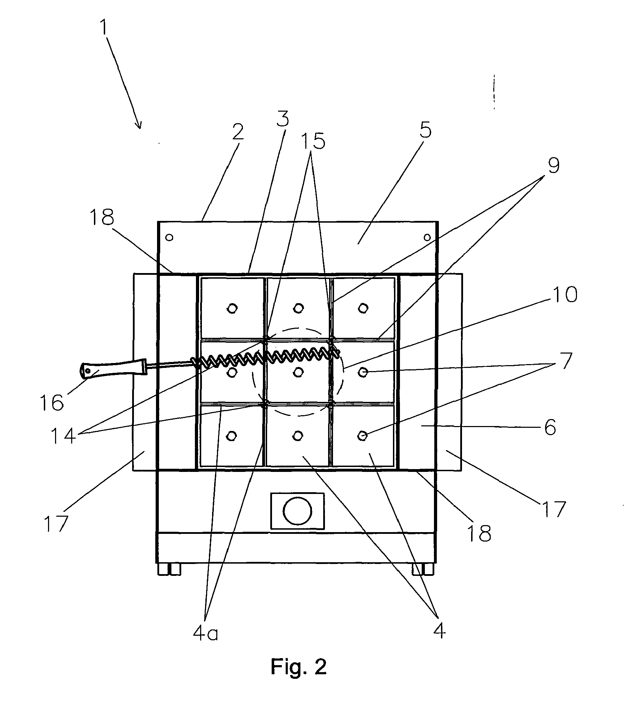

La figure 2 représente une vue du dessus du dispositif illustré aux figures 1a et 1b.

En se reportant aux figures, dans lesquelles les mêmes numéros de référence désignent des éléments identiques, il est illustré un dispositif 1 de découpe automatique de pâte en pâtons comprenant une carcasse 2 dans laquelle est disposée une cuve 3 agencée pour recevoir un volume de pâte à découper, ladite cuve étant pourvue d'un fond 4 et d'un couvercle 5 mobile pouvant être déplacé entre une première position de fermeture de la cuve par ledit couvercle et une deuxième position d'ouverture de la cuve, le fond de la cuve étant connecté à un premier support 6 par un premier moyen de connexion 7 espaçant ledit support dudit fond et constitué d'une pluralité de premiers bras, ce support pouvant être déplacé axialement à la cuve par un premier moyen de déplacement 8 entre une première position A dans laquelle le fond de la cuve est disposé au niveau le plus bas de celle-ci pour pouvoir y charger un dit volume de pâte à découper et une deuxième position B dans laquelle le fond de la cuve est à son niveau le plus élevé de celle-ci, pour pouvoir en extraire le volume de pâte découpé. Le dispositif selon l'invention comprend en outre un ensemble 9 de lames de découpe de pâte en pâtons connecté à un deuxième support 10, celui-ci pouvant être déplacé par un deuxième moyen de déplacement 11 entre une première position C de retrait dans laquelle l'ensemble de lames est disposé sous ledit fond dans la première position du premier support et une deuxième position D dans laquelle ledit ensemble affleure le couvercle de la cuve dans la première position dudit couvercle, des rainures 4a étant agencées dans le fond de la cuve pour le passage dans ces rainures de l'ensemble de lames, ces rainures découpant le fond de la cuve en plaquettes, chaque plaquette étant connectée au premier support dudit fond par un des bras constituant le premier moyen de connexion. La hauteur de l'ensemble de lames est dans le mode de réalisation illustré sensiblement égale à celle de la cuve. L'un des premier et deuxième supports est constitué d'un plateau dont les dimensions sont choisies de sorte qu'il isole le fond de la cuve du volume interne du dispositif situé sous ledit plateau et le dispositif comprend un moyen d'accès 12 depuis l'extérieur du dispositif à une chambre de nettoyage 13 délimitée entre le fond de la cuve et le plateau lorsque ce dernier est disposé sous le niveau le plus bas de celle-ci. Dans le mode de réalisation illustré par les figures, le premier et le deuxième moyen de déplacement sont chacun constitués d'un vérin hydraulique actionné par un moteur, les deux vérins étant coaxiaux, celui compris dans le premier moyen de déplacement coulissant dans celui compris dans le deuxième moyen de déplacement.

Dans le même mode de réalisation, le deuxième support est disposé sous le premier relativement au couvercle du dispositif et l'ensemble de lames est connecté au deuxième support par un deuxième moyen de connexion 10 espaçant cet ensemble de lames du deuxième support d'une distance au moins égale à la distance d'espacement du fond de la cuve au premier support, ce deuxième moyen de connexion étant constitué dans le mode de réalisation illustré d'une pluralité de deuxièmes bras. Alternativement, ledit deuxième moyen de connexion pourrait être constitué d'un unique deuxième bras. Dans le mode de réalisation illustré, c'est le premier support qui est constitué d'un plateau, pourvu d'un orifice 11 pour chaque deuxième bras, agencé pour lui permettre d'y coulisser de manière étanche. Une configuration alternative de ce mode de réalisation est possible, dans laquelle c'est le deuxième support qui est constitué d'un plateau, auquel cas celui-ci comprend un orifice agencé pour y faire coulisser le vérin hydraulique compris dans le premier moyen de déplacement.

Dans un mode de réalisation alternatif de l'invention non illustré, le premier support est disposé sous le deuxième relativement au couvercle du dispositif. Dans ce mode de réalisation également, soit le premier support soit le deuxième peut être constitué d'un plateau mais l'ensemble de lames peut être connecté directement au deuxième support, sans l'intermédiaire d'un deuxième moyen de connexion comme c'est le cas dans le mode de réalisation illustré par les figures. Dans le cas où aucun deuxième moyen de connexion n'est présent, seul le premier support pourra en pratique être constitué d'un plateau, afin de permettre un accès aisé depuis l'extérieur du dispositif à la chambre de nettoyage délimitée entre le fond de la cuve et le plateau, dès lors qu'en l'absence de deuxième moyens de connexion, cette chambre de nettoyage ne pourra être dégagée de l'ensemble de lames que lorsque le deuxième support sera dans sa deuxième position.

Dans le mode de réalisation de l'invention illustré par les figures, deux bords opposés du plateau constituant le premier support du fond de la cuve affleurent respectivement une paroi différente de la carcasse et le moyen d'accès comprend deux orifices agencés respectivement dans chacune desdites parois et pour chaque orifice, un clapet de fermeture 17 de cet orifice. Quand aux deux autres bords opposés du plateau, ils affleurent chacun une extension 18 de la paroi de la cuve agencée au droit du bord considéré du plateau. Chaque extension s'étend vers le dessous de la cuve jusqu'au-delà du plateau dans sa première position et latéralement jusqu'aux deux parois de la carcasse transversales à chaque dite extension. Alternativement, un seul des bords du plateau peut affleurer une paroi de la carcasse et les trois autres affleurer chacun une extension de la paroi de la cuve agencée au droit du bord considéré, comme décrit ci-dessus. Dans ce cas, le moyen d'accès comprendra un orifice agencé dans la paroi de la carcasse qu'affleure un bord du plateau et un clapet de fermeture 17 de cet orifice. Alternativement encore, le plateau peut être dimensionné pour affleurer chaque paroi de la carcasse du dispositif. Dans cette dernière configuration, aucune extension de parois de la cuve n'est nécessaire, comme c'est le cas dans le mode de réalisation illustré par les figures. Dans ces différentes configuration du plateau, l'isolation du fond de la cuve du volume interne du dispositif situé sous ledit plateau est assurée.

Pour éviter que la pâte introduite dans le dispositif ne colle à ses parois intérieures, aux lames ainsi qu'à la face intérieure du couvercle, le boulanger saupoudre de la farine dans la cuve et sur la pâte lors de son introduction dans le dispositif. Lors de l'étape de compression de la pâte préalable à celle de découpe en pâton, l'excès de farine saupoudrée et d'air contenu dans la cuve sont chassés de cette dernière par au moins un orifice (non représenté) prévu à cet effet entre le bord supérieur de ladite cuve et le couvercle, orifice ouvert sur un conduit (non représenté) d'évacuation de cette farine vers la chambre de nettoyage du dispositif selon l'invention. En pratique, une brosse 16 ou alternativement un conduit d'aspiration est introduite dans cette chambre pour en retirer tout résidu de pâte ou farine lorsque le support du fond de la cuve est dans sa première position et celui de l'ensemble de lames dans sa deuxième position.

Lors de son utilisation, le dispositif selon l'invention tel qu'illustré par les figures fonctionne comme suit: Le couvercle de la cuve est disposé dans sa deuxième position d'ouverture, le premier support du fond de la cuve, constitué d'un plateau, est disposé dans sa première position par le premier moyen de déplacement constitué d'un premier vérin hydraulique actionné par un moteur et le deuxième support de l'ensemble de lames dans sa première positon également par le deuxième moyen de déplacement constitué également d'un deuxième vérin hydraulique actionné par un moteur. Un volume de pâte est ensuite introduit dans la cuve puis le couvercle de cette dernière est déplacé dans sa première position de fermeture. Le premier support est alors déplacé en direction du couvercle de la cuve par le premier moyen de déplacement, pour compresser le volume de pâte entre le fond de la cuve et son couvercle. Le deuxième support est ensuite déplacé vers sa deuxième position de sorte que l'ensemble de lames traverse le fond de la cuve par les rainures qu'il comprend et découpe le volume de pâte en pâtons. Pendant les opérations de compression et de découpe susmentionnées, des résidus de pâte peuvent s'échapper de la cuve par les rainures agencées dans son fond et tombent alors sur le plateau. Une fois le volume de pâte découpé en pâtons, le couvercle de la cuve est déplacé dans sa première position d'ouverture et le premier support du fond de la cuve est ensuite déplacé vers sa deuxième position de sorte à pouvoir extraire les pâtons découpés de la cuve. Cette extraction effectuée, ledit premier support est déplacé à nouveau vers sa première position, le deuxième support demeurant dans sa deuxième position. Les clapet d'ouverture du moyen d'accès à la chambre de nettoyage délimitée entre le fond de la cuve et le plateau constituant son premier support sont alors ouverts et les résidus de pâte et le cas échéant la farine présente dans cette chambre en sont évacués au moyen de la brosse prévue à cet effet, laquelle peut être rangée dans un logement prévu dans la carcasse du dispositif. Après que la chambre de nettoyage ait été vidée des résidus de pâte et le cas échéant de la farine qu'elle contenait, le deuxième support est déplacé vers sa première position et la cuve du dispositif est à nouveau prête à recevoir un autre volume de pâte à découper en pâtons.

## Revendications

1. Dispositif (1) de découpe automatique de pâte en pâtons comprenant une carcasse (2) dans laquelle est disposée une cuve (3) agencée pour recevoir un volume de pâte à découper, ladite cuve étant pourvue d'un fond (4) et d'un couvercle (5) mobile pouvant être déplacé entre une première position de fermeture de la cuve par ledit couvercle et une deuxième position d'ouverture de la cuve, le fond de la cuve étant connecté à un premier support (6) par un premier moyen de connexion (7) espaçant ledit support dudit fond, celui-ci pouvant être déplacé axialement à la cuve par un premier moyen de déplacement (8) entre une première position (A) dans laquelle le fond de la cuve est disposé au niveau le plus bas de celle-ci pour pouvoir y charger un dit volume de pâte à découper et une deuxième position (B) dans laquelle le fond de la cuve est à son niveau le plus élevé de celle-ci, pour pouvoir en extraire le volume de pâte découpé, le dispositif comprenant en outre un ensemble (9) de lames de découpe de pâte en pâtons connecté à un deuxième support (10), celui-ci pouvant être déplacé par un deuxième moyen de déplacement (11) entre une première position (C) de retrait dans laquelle l'ensemble de lames est disposé sous ledit fond dans la première position du premier support et une deuxième position (D) dans laquelle ledit ensemble affleure le couvercle de la cuve dans la première position dudit couvercle, des rainures (4a) étant agencées dans le fond de la cuve pour le passage dans ces rainures de l'ensemble de lames; **caractérisé en ce que** l'un des premier et deuxième supports est constitué d'un plateau dont les dimensions sont choisies de sorte qu'il isole le fond de la cuve du volume interne du dispositif situé sous ledit plateau et **en ce que** le dispositif comprend un moyen d'accès (12) depuis l'extérieur du dispositif à une chambre de nettoyage (13) délimitée entre le fond de la cuve et le plateau lorsque ce dernier est disposé sous le niveau le plus bas de celle-ci.

2. Dispositif selon la revendication 1 **caractérisé en ce que** le deuxième support est disposé sous le premier relativement au couvercle du dispositif.

3. Dispositif selon la revendication 2, **caractérisé en ce que** le deuxième support est constitué d'un plateau.

4. Dispositif selon la revendication 2, **caractérisé en ce que** le premier support est constitué d'un plateau.

5. Dispositif selon l'une des revendications 2 à 4, **caractérisé en ce que** l'ensemble de lames est connecté audit deuxième support par un deuxième moyen de connexion (14) espaçant l'ensemble de lames du deuxième support d'une distance au moins égale à la distance d'espacement du fond de la cuve au premier support.

6. Dispositif selon la revendication 5, **caractérisé en ce que** le deuxième moyen de connexion est constitué d'au moins un deuxième bras, de préférence d'une pluralité de deuxièmes bras.

7. Dispositif selon la revendication 6 lorsqu'elle dépend de la 4, **caractérisé en ce que** le plateau est pourvu d'un orifice (15) pour chaque deuxième bras, agencé pour lui permettre d'y coulisser de manière étanche.

8. Dispositif selon la revendication 1, **caractérisé en ce que** le premier support est disposé sous le deuxième relativement au couvercle du dispositif.

9. Dispositif selon la revendication 8, **caractérisé en ce que** le premier support est constitué d'un plateau.

10. Dispositif selon la revendication 8, **caractérisé en ce que** le deuxième support est constitué d'un plateau.

11. Dispositif selon l'une quelconque des revendications précédentes, **caractérisé en ce que** le premier moyen de connexion est constitué d'au moins premier un bras, de préférence d'une pluralité de premiers bras.

12. Dispositif selon l'une quelconque des revendications précédentes, **caractérisé en ce qu'**au moins un bord du plateau affleure une paroi de la carcasse et **en ce que** le moyen d'accès comprend au moins un orifice agencé dans ladite paroi au dessus dudit bord lorsque le plateau se trouve dans sa première position, chaque orifice pouvant être obturé par un moyen d'obturation (17).

13. Dispositif selon la revendication précédente, **caractérisé en ce que** deux bords opposés du plateau affleurent respectivement une paroi différente de la carcasse et **en ce que** le moyen d'accès comprend deux orifices agencés respectivement dans chacune desdites parois.
